(19) **Europäisches Patentamt**

**European Patent Office**

**Office européen des brevets**

(11) Veröffentlichungsnummer : **0 130 580**
**B1**

(12) # EUROPÄISCHE PATENTSCHRIFT

(45) Veröffentlichungstag der Patentschrift :
**23.03.88**

(51) Int. Cl.⁴ : **C 01 B   3/22**

(21) Anmeldenummer : **84107500.5**

(22) Anmeldetag : **28.06.84**

(54) **Verfahren zur Vergasung von Abfallflüssigkeiten, die organische Bestandteile enthalten und Schachtofen zur Durchführung des Verfahrens.**

(30) Priorität : **02.07.83 DE 3323981**

(43) Veröffentlichungstag der Anmeldung :
**09.01.85 Patentblatt 85/02**

(45) Bekanntmachung des Hinweises auf die Patenterteilung : **23.03.88 Patentblatt 88/12**

(84) Benannte Vertragsstaaten :
**CH FR GB LI**

(56) Entgegenhaltungen :
**EP-A- 0 055 440**
**CH-A-   135 995**
**DE-A- 2 526 947**
**DE-A- 2 732 418**
**FR-A- 2 277 137**

(73) Patentinhaber : **Kernforschungsanlage Jülich Gesellschaft mit beschränkter Haftung**
**Postfach 1913**
**D-5170 Jülich 1 (DE)**

(72) Erfinder : **Mallek, Heinz**
**Bachdresch 15**
**D-5172 Linninch-Tetz (DE)**

EP 0 130 580 B1

**Beschreibung**

Die Erfindung bezieht sich auf ein Verfahren zur Vergasung von Abfallflüssigkeiten, die organische Bestandteile enthalten, sowie auf einen Schachtofen zur Durchführung des Verfahrens.

Abfallflüssigkeiten der vorgenannten Art sind beispielsweise Lackschlämme, die nach Auftragen oder Aufspritzen von Lacken auf zu färbende Werkstücke als verschmutzte Restflüssigkeiten verbleiben. In Lackierwerkstätten und Spritzereien fallen solche Schlämme in erheblicher Menge als Abfall an. Rückstände von Lack, die sich nicht weiterverwerten lassen, sind jedoch auch beim Herstellen von Lacken nicht zu vermeiden. Hierzu gehören beispielsweise Fehlchargen.

Lackschlämme werden — gegebenenfalls nach Eindicken — auf Sonderdeponien abgelagert. Dies ist nicht nur mit Aufwand verbunden. Zur Ablagerung stehen vielmehr nur eine geringe Anzahl von Deponien zur Verfügung, die im Laufe der Zeit wegen starker Auslastung immer knapper werden.

Schwierigkeiten ähnlicher Art bereiten auch Farb- und Lösungsmittelabfälle.

Aus FR-A-2277 137 ist es bekannt, Abfälle, darunter auch Abfallflüssigkeiten mit organischen Bestandteilen in gasförmige Produkte zu überführen und durch eine Glutzone hindurch abzusaugen. Bei der Vergasung entstehen auch hochmolekulare Gasphasen, die sich jedoch mit dem bekannten Verfahren nicht beseitigen lassen.

Aufgabe der Erfindung ist es, ein Verfahren zur Beseitigung von Abfallflüssigkeiten mit organischen Bestandteilen zu schaffen, bei dem auch hochmolekulare Anteile gecrackt werden können. Das Verfahren soll darüberhinaus in einfacher Weise durchführbar sein.

Diese Aufgabe der Erfindung wird durch die in Patentanspruch 1 angegebenen Maßnahmen gelöst. Danach wird die Abfallflüssigkeit in der Weise dosiert auf ein Glutbett gegeben, daß die Abfallflüssigkeit verdampft. Es werden gasförmige Produkte und feste Restbestandteile gebildet. Die gasförmigen Produkte werden durch das Glutbett hindurch abgesaugt und dabei so erhitzt, daß hochmolekulare organische Gasphasen gecrackt werden. Hierzu weist das Glutbett zumindest eine von den gasförmigen Produkten zu durchströmende Temperaturzone mit einer Temperatur im Bereich zwischen 800 und 1 000 °C auf. Es entsteht ein leicht entzündbares Gasgemisch mit niedermolekularen Gaskomponenten, wie $H_2$, CO, $CH_4$. Das aus dem Glutbett abgesaugte Gasgemisch läßt sich somit gegebenenfalls unter Zufuhr zusätzlichen Sauerstoffs als umweltfreundliches Brenngas zur Energiegewinnung verwerten. Das Brenngas ist von den beim Umsatz der Abfallflüssigkeit entstehenden festen Restbestandteilen bereits weitgehend gereinigt. Die Restbestandteile bilden einen Teil des Glutbettes und werden aus dem Glutbett als Asche ausgetragen.

Weitere Ausbildungen des erfindungsgemäßen Verfahrens sind in Patentansprüchen 2 bis 6 angegeben. Es ist vorteilhaft, die gasförmigen Produkte nach einer ersten Abscheidung von Ascheteilchen durch eine nachgeschaltete Crack- und Reinigungsstufe mit einer Temperatur zwischen 900 und 1 000 °C hindurchzuleiten. In dieser Stufe erfolgt ein Aufspalten restlicher, im abströmenden Gasgemisch noch enthaltener hochmolekularer organischer Gasbestandteile. Darüberhinaus wird das Brenngas von noch mitgeführten Staubteilchen gereinigt. Dies erfolgt in einem Glutbett, das die gasförmigen Produkte durchsetzen. Der Crack- und Reinigungsstufe entströmt ein an Teeren und Ölen armes Brenngas.

Zur Ausbildung der Glutbetten wird entgastes kohlenstoffreiches Material, beispielsweise Koks oder Holzkohle, verwendet. Im ersten Glutbett lassen sich zusätzlich auch Mahlkugeln einsetzen, die die zur Ausbildung des Glutbettes verwendeten Materialstücke zerkleinern.

Durch Versprühen der Abfallflüssigkeit über dem Glutbett der ersten Stufe und durch Zerteilen in kleine Tropfen wird das Verdampfen erleichtert und eine gleichmäßige Verteilung im Schachtraum über dem Glutbett erreicht.

Merkmale eines Schachtofens zur Durchführung des Verfahrens sind in Patentansprüchen 7 bis 9 angegeben. Der Schachtofen weist eine Gutaufgabe im oberen Bereich seines Schachtraumes auf, der nach unten durch einen Rost begrenzt wird, der zur Abstützung eines Glutbettes dient.

Der Rost ist im Schacht rotierbar oder schwenkbar derart angeordnet, daß zwischen seinem Rand und der Schachtwand ein Durchlaßspalt für Ascheteilchen verbleibt, die unter Schwerkraftwirkung aus dem Glutbett ausgetragen werden. Oberhalb des Glutbettes mündet im Schacht eine Zuführung für eine auf das Glutbett aufzutragende Abfallflüssigkeit, die organische Bestandteile enthält. Eine in den Schacht eingeführte Gasleitung dient zur Zufuhr von Oxidationsmitteln ins Glutbett, das eine Temperaturzone mit einer Temperatur im Bereich zwischen 800 und 1 000 °C aufweist. Der Schachtraum ist im oberen Bereich gasdicht abschließbar, das im Schachtraum durch Verdampfen und Vergasen der Abfallflüssigkeit im Glutbett entstehende Gasgemisch wird im unteren Bereich des Schachtofens abgesaugt. Ein hierfür erforderlicher Abzug ist unterhalb des Rostes angeschlossen. Um ein Gasgemisch zu erhalten, das keine oder nur sehr geringe Teerrückstände enthält, wird eine zweite Crack- und Reinigungsstufe zugeschaltet. Die zweite Stufe enthält in gleicher Weise wie der Schachtofen ein Glutbett. Das Glutbett weist eine Temperatur zwischen 900 und 1 000 °C auf. Die aus dem Schachtofen abziehenden gasförmigen Produkte durchströmen das Glutbett im Gegenstrom zum unter Schwerkraftwirkung im Reduktionsreaktor absinkenden Glutbettmaterial. Im Glutbett werden die noch im Gasgemisch enthaltenen hochmolekularen organischen Gasbestandteile gecrackt. Zusätzlich werden vom Gas mitgeführte feine Ascheteilchen zurückgehalten.

Die Glutbetten bestehen aus entgastem kohlenstoffreichen Material, beispielsweise aus Koks oder aus Holzkohle. Eine Zerkleinerungswirkung wird durch Zugabe von Mahlkugeln erreicht, die dem Glutbett im Schachtofen zugegeben werden.

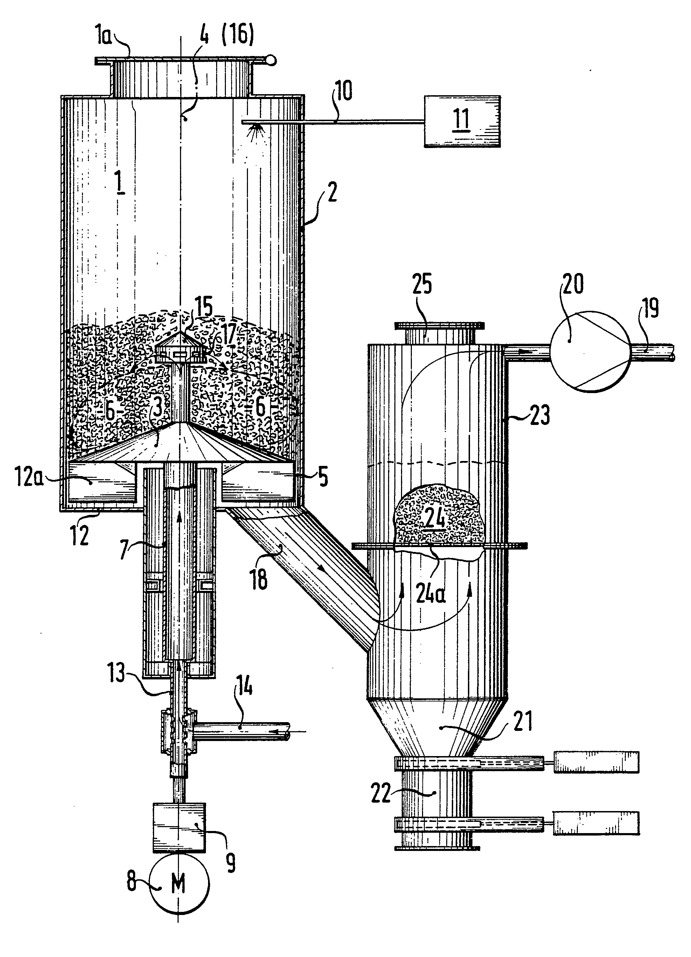

Nachfolgend wird die Erfindung anhand von Ausführungsbeispielen näher erläutert. In der Zeichnung ist ein Schachtofen zur Durchführung des Verfahrens schematisch dargestellt. Die Figur zeigt einen Schachtofen mit nachgeschalteter Crack- und Reinigungsstufe im Längsschnitt.

In der Zeichnung ist ein Schachtofen wiedergegeben, dessen Schachtraum 1 in seinem oberen Bereich gasdicht verschließbar ist. Eine Schachtwand 2 weist nach unten eine Öffnung zur Aufnahme eines Rostes 3 auf, der im Ausführungsbeispiel im Schacht um dessen Schachtachse 4 rotierbar angeordnet ist. Der Rost 3 ist im Schacht derart eingesetzt, daß zwischen Rand des Rostes 3 und Schachtwand 2 ein Durchlaßspalt 5 verbleibt. Durch diesen Spalt hindurch wird aus einem oberhalb des Rostes gebildeten und vom Rost gestützten Glutbett 6 unter Schwerkraftwirkung Asche ausgetragen. Der Rost 3 ist kegelförmig ausgebildet. Über die Kegeloberfläche rutscht die auszutragende Asche zum Durchlaßspalt 5.

Der Austrag der Asche wird durch Rotation des Rostes gesteuert. Hierzu ist der Rost 3 mit einer Antriebswelle 7 fest verbunden, die von einem Motor 8 über ein Getriebe 9 schrittweise drehbar ist. Je rascher die Schrittfolge gewählt wird, und je länger die Schrittweite und je höher die Rotationsgeschwindigkeit des Rostes eingestellt ist, um so mehr Asche wird ausgetragen.

Statt eines rotierenden Rostes läßt sich auch ein um eine senkrecht zur Schachtachse 4 verlaufende Querachse schwenkbarer Rost einsetzen. Ein solcher Rost ist in der Zeichnung nicht dargestellt. Bei einem schwenkbaren Rost wird zwischen Rand des Rostes und Schachtwand ein Durchlaßspalt gebildet, dessen Spaltweite bei Bewegung des Rostes variiert. Je größer der Winkel gewählt wird, um den der Rost zum Schwenken ausgelenkt wird, um so mehr verändert sich die Spaltweite zwischen einem minimalen und einem maximalen Wert. Einem Verstopfen des Durchlaßspaltes durch Verklemmen von Ascheteilchen wird so entgegengewirkt. Ein schwenkbarer Rost weist auch Vorteile bei erforderlicher Reinigung des Schachtofens auf. Zur Reinigung wird der Durchlaßspalt durch Schwenken des Rostes so verbreitert, daß alle im Schachtofen vorhandenen Stücke nach unten austragbar sind. Wird der schwenkbare Rost prismatisch ausgebildet, so gleitet auch bei diesem Rost die aus dem Glutbett auszutragende Asche über eine schiefe Ebene zum Durchlaßspalt.

Oberhalb des Glutbettes 6 mündet in den Schacht 1 des Schachtofens eine Zuführung 10 für die Abfallflüssigkeit. Die Zuführung 10 ist an einer Dosiereinrichtung 11 angeschlossen, die mit einem Lagerbehälter für die Abfallflüssigkeit verbunden ist. In der Zeichnung ist der Lagerbehälter nicht dargestellt. Die Abfallflüssigkeit weist organische Bestandteile auf. Im Ausführungsbeispiel handelt es sich um Farbabfälle mit organischen Bestandteilen wie Lösungsmittel, Eindicker oder auch Farbstoffen sowie anorganischen Zuschlagstoffen wie Pigmenten oder Füllstoffen. Es lassen sich jedoch auch Lackschlämme verarbeiten.

Die Dosiereinrichtung 11 weist eine regelbare Flüssigkeitspumpe oder ein einstellbares Ventil auf, mit denen die dem Schachtofen zuzuführende Abfallflüssigkeitsmenge dosierbar ist. An der Mündung der Zuführung 10 können Düsen zum Versprühen der Abfallflüssigkeit im Schachtraum oberhalb des Glutbettes 6 angebracht sein. Im Ausführungsbeispiel wird die Abfallflüssigkeit in einfacher Weise auf das Glutbett vertropft.

Zur Zufuhr von Sauerstoff in das Glutbett 6 ist die Antriebwelle 7 des Rostes 3 als Hohlrohr ausgebildet und an ihrem vom Schachtboden 12 nach unten herausragenden äußeren Ende 13 an einer Sauerstoff führenden Gasleitung 14 angeschlossen. Der Sauerstoff strömt im Hohlrohr bis zur Kegelspitze 15 des Rostes 3 und wird über symmetrisch zur Kegelachse 16 angeordnete Auslaßöffnungen 17 in das Glutbett 6 eingeführt. Die Kegelachse 16 fällt im Ausführungsbeispiel mit der Schachtachse 4 zusammen. In der Zeichnung wurde deshalb das Bezugszeichen 16 in Klammern neben das Bezugszeichen 4 gesetzt. Der kegelförmige Rost kann aber auch taumelnd im Schachtofen angeordnet sein, so, daß sich die Spaltweite des Durchlaßspaltes zwischen Rand des Rostes und Schachtwand beim Drehen des Rostes örtlich verändert.

Im Rost 3 können abweichend vom in der Zeichnung dargestellten Ausführungsbeispiel Auslaßöffnungen für Sauerstoff auch in verschiedenen Höhen des kegeligen Rostes angeordnet sein. So läßt sich Sauerstoff zusätzlich beispielsweise nur wenig oberhalb des Durchlaßspaltes 5 in das Glutbett einführen. Dies ist vor allem dann geboten, wenn das aus dem Schachtofen entnommene Brenngas unmittelbar umgesetzt und zur Wärmeerzeugung verbrannt werden soll.

Die an der Kegelspitze 15 eingeführte Sauerstoffmenge wird bevorzugt so bemessen, daß die zum Cracken der Gase erforderliche Glutbetttemperatur innerhalb des Schachtofens durch Verbrennen eines Teils des im Glutbett entstehenden Gases aufrechterhalten wird. Im Ausführungsbeispiel besteht das Glutbett aus Koks, der über eine verschließbare Öffnung 1a am Kopf des Schachtes einschüttbar ist. Das Glutbett weist eine Temperatur zwischen 800 und 1 000 °C auf. Die Glutbettemperatur ist so einzustellen, daß die beim Vergasen des Farbabfalls entstehenden organischen Produkte beim Durchströmen des Gases durch die Temperaturzone gecrackt werden. Im Ausführungsbeispiel ist die Temperatur auf 800 bis 900 °C eingestellt, da dem Schachtofen eine Crack- und Reinigungsstufe 23 nachgeschaltet ist.

Das im Glutbett 6 erzeugte Gasgemisch wird über einen Abzug 18 im unteren Bereich aus dem Schachtofen abgesaugt. Das entstehende Gas durchströmt also den Schachtofen im Gleichstrom mit der in den Schacht eingeführten Abfallflüssigkeit. Für den nötigen Saugdruck sorgt im Ausführungsbeispiel ein im Austritt 19 eingesetztes Gebläse 20. Gasgemisch und Ascheteilchen werden nach Durchtritt durch den Durchlaßspalt 5 voneinander getrennt. Die Ascheteilchen sammeln sich zunächst am Schachtboden 12 und werden mit Schaufeln 12a zum Abzug 18 befördert, durch den sie in einen Aschekasten 21 fallen. Aus diesem sind sie über eine Schleuse 22 austragbar.

Im Ausführungsbeispiel ist im Schachtofen, wie oben bereits erwähnt, zum Cracken restlicher hochmolekularer Kohlenwasserstoffe des erzeugten Gasgemisches eine zweite Crack- und Reinigungsstufe 23 nachgeschaltet. Die Crack- und Reinigungsstufe 23 weist ebenfalls ein Glutbett 24)* auf, dessen Temperatur im Bereich zwischen 900 und 1 000°C eingestellt ist. Der am Schachtofen angeschlossene Abzug 18 mündet unterhalb des Glutbettes 24 in die Crack- und Reinigungsstufe. Das eingeführte Gasgemisch strömt am Kopf dieser Stufe über den Austritt 19 wieder ab. Im Glutbett 24 werden nicht nur im Gasgemisch noch enthaltende hochmolekulare organische Gasbestandteile gecrackt, es wird auch ein Reinigungseffekt erzielt. Vom Gasgemisch mitgeführte Ascheteilchen werden zurückgehalten. Aus der Crack- und Reinigungsstufe 23 tritt ein im wesentlichen $H_2$, CO, $CH_4$ enthaltendes Gasgemisch aus, das unmittelbar oder nach Zwischenlagerung gegebenenfalls in Druckspeichern als Brenngas verwertbar ist.

Über dem Glutbett 24 befindet sich eine verschließbare Einfüllöffnung 25 für Koks, der im Ausführungsbeispiel als Brennmaterial für das Glutbett 24 dient. Als entgastes kohlenstoffreiches Material läßt sich jedoch auch Holzkohle einsetzen. Sauerstoff wird der Crack- und Reinigungsstufe 23 im Ausführungsbeispiel nicht zugeführt. Dabei wird davon ausgegangen, daß der dem Brenngas im Schachtofen zugeführte Sauerstoff auch zu einer Teilverbrennung des Brenngases der Crack- und Reinigungsstufe 23 ausreichend ist, um die zur Crackung der Gasanteile erforderliche Glutbetttemperatur in der Crack- und Reinigungsstufe aufrechtzuerhalten. Dies verringert den Brennmaterialbedarf für diese Stufe.

In einem Schachtofen der vorbeschriebenen Art mit einem Schachtvolumen von 100 dm³ wurden bis zu 50 kg Lackschlamm pro Stunde vergast. Der Lackschlamm wies zwischen 40 und 50 Gew.% anorganische Zuschlagstoffe auf. Die Temperatur im Glutbett 6 war auf ca. 900 °C, die Temperatur im Glutbett 24 auf etwa 1 000 °C eingestellt. Zur Ausbildung der Glutbetten wurde Koks mit einer mittleren Stückgröße zwi-

*Das Glutbett wird von einem Rost 24a gestützt.

schen 10 bis 30 mm ⌀ verwendet.

Das aus dem Austritt 19 abziehende Brenngas wies Generatorgasqualität auf. Die brennbaren Gasanteile, wie CO, $H_2$, $CH_4$, betrugen 55 Vol.%. Es konnte eine Gasmenge von 250 Normkubikmeter pro Stunde mit einem Heizwert von 5 000 Kilojoul erzeugt werden.

Als Abfallflüssigkeit mit organischen Bestandteilen kommen auch beispielsweise öl- oder fetthaltige Lösungen in Betracht. Auch aus diesen Abfallflüssigkeiten läßt auf gleiche Weise Brenngas erzeugen. Neben der Beseitigung dieser Flüssigkeiten dient das Verfahren zugleich zur Einsparung fossiler Brennstoffe.

**Patentansprüche**

1. Verfahren zur Vergasung von Abfallflüssigkeiten, die organische Bestandteile enthalten, wobei die Abfallflüssigkeiten in gasförmige Produkte überführt werden die durch ein Glutbett hindurch abgesaugt und dabei im Glutbett erhitzt werden, und wobei das abgesaugte Gasgemisch von Ascheteilchen gereinigt als Brenngas dient, dadurch gekennzeichnet, daß die Abfallflüssigkeit zur Überführung in gasförmige Produkte auf ein Glutbett aufgegeben wird, das zumindest eine Temperaturzone mit einer Temperatur im Bereich zwischen 800 und 1 000 °C aufweist, daß die gasförmigen Produkte durch die Temperaturzone hindurch abgesaugt und dabei hochmolekulare Anteile der gasförmigen Produkte gecrackt werden.

2. Verfahren nach Anspruch 1, dadurch gekennzeichnet, daß die gasförmigen Produkte nach einer ersten Abscheidung von Ascheteilchen in einer zweiten Stufe erneut bei einer Temperatur zwischen 900 und 1 000 °C gecrackt und gereinigt werden.

3. Verfahren nach Anspruch 2, dadurch gekennzeichnet, daß die gasförmigen Produkte ein zweites Glutbett durchströmen.

4. Verfahren nach einem der Ansprüche 1, 2 oder 3, dadurch gekennzeichnet, daß zur Ausbildung der Glutbetten entgastes kohlenstoffreiches Material verwendet wird.

5. Verfahren nach einem der vorhergehenden Ansprüche, dadurch gekennzeichnet, daß dem ersten Glutbett Mahlkugeln zugegeben werden.

6. Verfahren nach einem der vorhergehenden Ansprüche, dadurch gekennzeichnet, daß die Abfallflüssigkeit über dem ersten Glutbett versprüht wird.

7. Schachtofen zur Durchführung des Verfahrens nach Anspruch 1 mit einer Gutaufgabe im oberen Bereich des Schachtraumes (1) und mit einem den Schachtraum nach unten begrenzenden Rost (3), der zur Abstützung eines im Schachtraum (1) ausbildbaren Glutbettes (6) dient und im Schacht rotierend oder schwenkbar derart angeordnet ist, daß zwischen Rand des Rostes (3) und Schachtwand (2) ein Durchlaßspalt (5) für unter Schwerkraftwirkung aus dem Glutbett (6) austragbare Ascheteilchen verbleibt, und mit einer ein Oxidationsmittel zum Glutbett (6) führenden Gasleitung (14) sowie mit einem unterhalb des Rostes (3) angeschlossenen Abzug (18) für im Schachtraum (1) gebildetes Gasgemisch, dadurch gekennzeichnet, daß der Schachtraum (1) in seinem oberen Bereich gasdicht abschließbar ist und in den Schachtraum (1) oberhalb des Glutbettes (6) eine Zuführung (10) für eine auf das Glutbett (6) aufzutragende Abfallflüssigkeit mündet, und daß der Abzug (18) zu einer vom Gasgemisch zum Austritt (19) durchstömbaren zweiten Crack- und Nachreinigungsstufe (23) mit einem Glutbett (24) geführt ist, das eine Temperatur zwischen 900 und 1 000 °C aufweist.

8. Schachtofen nach Anspruch 7, dadurch gekennzeichnet, daß die Glutbetten (6, 24) aus entgastem kohlenstoffreichem Material bestehen.

9. Schachtofen nach einem der Ansprüche 7 oder 8, dadurch gekennzeichnet, daß dem Glutbett (6) im Schachtraum (1) Mahlkugeln zugesetzt sind.

## Claims

1. Process for gasification of waste liquids which contain organic constituents, in which the waste liquids are converted into gaseous products which are drawn off through an incandescent bed and are heated in the incandescent bed, and in which the gas mixture drawn off, purified of ash particles, serves as combustible gas, characterized in that the waste liquid for conversion into gaseous products is fed to an incandescent bed which has at least one temperature zone with a temperature in the range between 800 and 1 000 °C, and in that the gaseous products are drawn off through the temperature zone and high-molecular fractions of the gaseous products are cracked in the process.

2. Process according to Claim 1, characterized in that after an initial separation of ash particles the gaseous products are cracked and purified again in a second stage at a temperature between 900 and 1 000 °C.

3. Process according to Claim 2, characterized in that the gaseous products flow through a second incandescent bed.

4. Process according to one of Claims 1, 2 or 3, characterized in that degassed, carbon-rich material is used to form the incandescent beds.

5. Process according to one of the preceding claims, characterized in that grinding balls are added to the first incandescent bed.

6. Process according to one of the preceding claims, characterized in that the waste liquid is atomized above the first incandescent bed.

7. Shaft furnace for carrying out the process according to Claim 1 with a material feeder in the upper part of the shaft chamber (1) and with a grate (3) bounding the bottom of the shaft chamber, which grate (3) acts as a support for an incandescent bed (6) which can be formed in the shaft chamber (1), and which is arranged so that it can be rotated or slewed in the shaft in such a way that an outlet gap (5) is left between the edge of the grate (3) and the shaft wall (2) for ash particles which can be discharged from the incandescent bed (6) under the influence of gravity, and with a gas line (14) supplying an oxidizing agent to the incandescent bed (6) and with an offtake (18), connected below the grate (3), for the gas mixture formed in the shaft chamber (1), characterized in that the upper part of the shaft chamber (1) can be closed so that it is gas-tight and a supply line (10) for a waste liquid which is to be applied to the incandescent bed (6) discharges into the shaft chamber (1) above the incandescent bed (6), and in that the off-take (18) is guided to a second cracking and postpurification stage (23), through which the gas mixture can flow to the outlet (19), with an incandescent bed (24) which has a temperature between 900 and 1 000 °C.

8. Shaft furnace according to Claim 7, characterized in that the incandescent beds (6, 24) consist of degassed, carbon-rich material.

9. Shaft furnace according to one of Claims 7 or 8, characterized in that grinding balls are added to the incandescent bed (6) in the shaft chamber (1).

## Revendications

1. Procédé de gazéification de déchets liquides contenant des constituants organiques, qui consiste à transformer les déchets liquides en produits gazeux que l'on aspire à travers un lit incandescent et que l'on chauffe dans le lit incandescent, et à utiliser comme gaz combustible le mélange gazeux aspiré et épuré des particules de cendre, caractérisé en ce qu'il consiste à charger le déchet liquide pour le transformer en des produits gazeux, sur un lit incandescent ayant au moins une zone de température comprise entre 800 et 1 000 °C, à faire passer les produits gazeux dans cette zone par aspiration, et à craquer ainsi des fractions des produits gazeux qui ont une grande masse moléculaire.

2. Procédé suivant la revendication 1, caractérisé en ce qu'il consiste à craquer les produits gazeux, après une première séparation de particules de cendre, en un second stade, à nouveau à une température comprise entre 900 et 1 000 °C et à les épurer.

3. Procédé suivant la revendication 2, caractérisé en ce qu'il consiste à faire passer les produits gazeux dans un second lit incandescent.

4. Procédé suivant l'une des revendications 1, 2 ou 3, caractérisé en ce qu'il consiste à utiliser, pour former les lits incandescents, du matériau dégazé riche en carbone.

5. Procédé suivant l'une des revendications précédentes, caractérisé en ce qu'il consiste à ajouter des boulets de broyage au premier lit incandescent.

6. Procédé suivant l'une des revendications précédentes, caractérisé en ce qu'il consiste à projeter le déchet liquide sur le premier lit incandescent.

7. Four à cuve pour la mise en œuvre du

procédé suivant la revendication 1, comprenant un dispositif de chargement de produits dans la partie supérieure de la cuve (1), et une grille (3) délimitant vers le bas la cuve, servant à soutenir un lit incandescent (6) susceptible de se former dans la cuve (1) et montée tournante ou basculante dans la cuve, de manière à laisser subsister, entre le bord de la grille (3) et la paroi (2) de la cuve, un intervalle de passage (5) pour des particules de cendre extraites du lit incandescent (6), sous l'effet de la force de la gravité, et un conduit (14) pour un gaz amenant un agent oxydant au lit incandescent (6), ainsi qu'une évacuation (18) raccordée en dessous de la grille (3) et destinée au mélange gazeux qui se forme dans la cuve (1), caractérisé en ce que la cuve (1) peut être fermée d'une manière étanche au gaz dans sa partie supérieure et dans la cuve (1) débouche, au-dessus du lit incandescent (6), un conduit d'amenée (10) d'un déchet liquide à charger sur le lit incandescent (6), et en ce que l'évacuation (18) mène à un second étage de craquage et de post-épuration (23), dans lequel peut passer du mélange gazeux pour aller à la sortie (19) et qui a un lit incandescent (24) dont la température est comprise entre 900 et 1 000 °C.

8. Four à cuve suivant la revendication 7, caractérisé en ce que les lits incandescents (6, 24) sont en un matériau dégazé riche en carbone.

9. Four à cuve suivant l'une des revendications 7 ou 8, caractérisé en ce que des boulets de broyage sont ajoutés au lit incandescent (6) de la cuve (1).

0 130 580